(19) Europäisches Patentamt
European Patent Office
Office européen des brevets

(11) **EP 2 956 422 B2**

(12) **NOUVEAU FASCICULE DE BREVET EUROPEEN**
Après la procédure d'opposition

(45) Date de publication et mention de la décision concernant l'opposition:
**07.12.2022 Bulletin 2022/49**

(45) Mention de la délivrance du brevet:
**18.07.2018 Bulletin 2018/29**

(21) Numéro de dépôt: 14705126.2

(22) Date de dépôt: **14.02.2014**

(51) Classification Internationale des Brevets (IPC):
**C03C 17/36** (2006.01)

(52) Classification Coopérative des Brevets (CPC):
**C03C 17/366; C03C 17/36; C03C 17/3626; C03C 17/3639; C03C 17/3644; C03C 17/3649; C03C 17/3681**

(86) Numéro de dépôt international:
**PCT/EP2014/052945**

(87) Numéro de publication internationale:
**WO 2014/125083 (21.08.2014 Gazette 2014/34)**

(54) **VITRAGE ANTISOLAIRE**

WÄRMEABSORBIERENDE VERGLASUNG

HEAT-ABSORBING GLAZING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2013 BE 201300100**
**14.03.2013 BE 201300168**
**27.06.2013 EP 13173991**
**27.06.2013 EP 13173992**

(43) Date de publication de la demande:
**23.12.2015 Bulletin 2015/52**

(73) Titulaire: **AGC Glass Europe**
**1348 Louvain-la-Neuve (BE)**

(72) Inventeur: **MAHIEU, Stijn**
**B-9920 Lovendegem (BE)**

(74) Mandataire: **AGC Glass Europe**
**Technovation Centre**
**Intellectual Property Department**
**Rue Louis Blériot 12**
**6041 Gosselies (BE)**

(56) Documents cités:
**WO-A1-2010/072973        WO-A2-2014/039345**
**US-A1- 2004 166 328      US-A1- 2005 196 622**
**US-A1- 2008 070 044      US-A1- 2010 279 144**
**US-A1- 2011 262 726**

EP 2 956 422 B2

EP 2 956 422 B2

**Description**

**1. Domaine de l'invention.**

Le domaine de l'invention est celui des vitrages de contrôle solaire constitués d'un substrat verrier portant un empilage multicouches, dont au moins une couche mince fonctionnelle réfléchissant le rayonnement infrarouge confère des propriétés de contrôle solaire. A cette couche fonctionnelle sont associées des couches diélectriques qui ont pour rôle notamment de régler les propriétés de réflexion, de transmission, de teinte et de protection contre les altérations mécaniques ou chimiques des propriétés de l'empilement. L'empilage inclut également une couche absorbant le rayonnement solaire qui a pour but d'accroître les propriétés de contrôle solaire conférées par la couche fonctionnelle réfléchissant le rayonnement infrarouge. De plus, le réglage de l'épaisseur de cette couche absorbant le rayonnement solaire permet l'ajustement de l'absorption lumineuse et de la transmission lumineuse.

Plus précisément, l'invention concerne les vitrages destinés à garnir les bâtiments mais également les véhicules automobiles. Selon ces utilisations certaines propriétés requises peuvent différer.

Les fonctionnalités des vitrages de contrôle solaire sont multiples. Elles concernent notamment la prévention de l'échauffement de l'intérieur de l'habitacle d'un véhicule automobile, en particulier vis-à-vis du rayonnement solaire traversant un toit transparent, ou du local d'un bâtiment exposé au rayonnement solaire lorsque celui-ci est suffisamment intense. Selon certaines formes de réalisation, cette prévention de l'échauffement peut être obtenue tout en maintenant une transmission lumineuse appropriée.

Dans le cas notamment des vitrages pour bâtiments, mais aussi pour l'automobile, il est de plus en plus souvent demandé qu'ils soient susceptibles de supporter des traitements thermiques sans que leurs propriétés optiques, en particulier leur transmission lumineuse et leur couleur notamment en réflexion, soient modifiées de manière sensible. L'objectif est de pouvoir disposer côte à côte des vitrages traités thermiquement et d'autres ne l'ayant pas été, sans que des différences de couleur soient manifestes. L'avantage se traduit surtout en coûts de production car il faut produire un seul produit au lieu de devoir fabriquer deux produits différents.

Dans la suite de la description, les propriétés optiques sont définies pour des vitrages dont le substrat est en verre "float" ordinaire clair de 4 mm d'épaisseur. Le choix du substrat influence bien évidemment ces propriétés. Pour le verre clair ordinaire la transmission lumineuse sous 4 mm, en l'absence de couche, se situe approximativement à 90% et la réflexion à 8%, mesurée avec une source conforme à l'illuminant « lumière du jour» normalisé D65 par la CIE et sous un angle solide de 2°. Les mesures énergétiques, quant à elles, sont faites suivant la norme EN 410.

Par le terme « verre », on entend désigner un verre inorganique. On entend par là un verre d'épaisseur au moins supérieure ou égale à 0,5 mm et au plus inférieure ou égale 20,0 mm, préférentiellement au moins supérieure ou égale à 1.5 mm et au plus inférieure ou égale à 10,0 mm, comprenant du silicium comme l'un des constituants indispensables de la matière vitreuse. Pour certaines applications, l'épaisseur peut par exemple être de 1,5 ou 1,6 mm, ou de 2 ou 2,1 mm. Pour d'autres applications, elle sera par exemple aux environs de 4 ou de 6 mm. On préfère les verres silico-sodocalciques clairs, extra-clairs ou colorés dans la masse.

La présence d'un empilage multicouches peut poser des problèmes de couleur. Le plus souvent le marché demande que les vitrages offrent, aussi bien en transmission qu'en réflexion, une coloration aussi neutre que possible et donc d'apparence relativement grise. Des colorations légèrement vertes ou bleutées sont aussi possibles. Toutefois, des teintes nettement plus prononcées, par exemple bleue ou verte, sont aussi parfois demandées pour satisfaire des critères esthétiques particuliers. Les empilages multicouches, et en particulier les natures, indices et épaisseurs des couches diélectriques encadrant les couches fonctionnelles, sont choisis notamment pour maîtriser ces colorations.

Les vitrages automobiles, en théorie peuvent être multiples pour leur conférer une meilleure propriété d'isolation notamment thermique, comme c'est en générale le cas des vitrages pour le bâtiment. Généralement toutefois, les vitrages automobiles portant une empilage multicouches du type de l'invention sont feuilletés, l'empilage multicouches étant disposés à l'intérieur du feuilleté.

Les systèmes de couches selon l'invention doivent encore se prêter aux mises en forme des vitrages. Ceux utilisés dans les véhicules sont notamment l'objet de traitements thermiques lors du formage, notamment du bombage des feuilles de verre, ou encore lors de la trempe destinée à leur conférer notamment des propriétés mécaniques renforcées. Certains vitrages pour le bâtiment doivent aussi souvent subir un traitement thermique de trempe pour leur conférer des propriétés mécaniques renforcées, notamment pour résister au choc thermique dû aux différences de température entre des zones ensoleillées et des zones ombragées d'un même vitrage installé en façade d'un bâtiment exposé au soleil. Les couches utilisées selon l'invention doivent supporter ces traitements sans que leurs propriétés soient dégradées ou leur aspect esthétique soit modifié. Des traitements de ce type imposent des températures qui dépassent 600°C pendant une dizaine de minutes. Soumis à ces températures les couches doivent conserver leurs qualités et propriétés.

L'aspect esthétique revêt aussi une grande importance commerciale pour les vitrages de protection solaire. En effet, il n'est pas seulement demandé que le vitrage possède des propriétés thermiques antisolaires, on demande aussi qu'il participe à la qualité esthétique de l'ensemble dont il fait partie. Ces critères esthétiques peuvent parfois engendrer des situations quelques peu conflictuelles avec l'obtention des meilleures propriétés thermiques recherchées.

## 2. Solutions de l'art antérieur.

L'art antérieur propose des vitrages antisolaires comportant au moins une couche fonctionnelle réfléchissant le rayonnement infrarouge et une couche absorbant le rayonnement solaire entourée de couches diélectriques.

La demande de brevet WO 2005/091864 A2 décrit un empilage multicouches comprenant deux couches fonctionnelles à base d'argent et une couche absorbant le rayonnement solaire, sous forme de NiCr, qui permet d'ajuster la transmission lumineuse du vitrage revêtu. Selon certains exemples, la couche absorbante NiCr est enfermée entre deux couches de nitrure de silicium et cet ensemble est disposé entre le substrat et la première couche d'argent, sous laquelle est disposée une couche de mouillage en ZnO. Dans certains modes de réalisation, l'empilage peut subir un traitement thermique de trempe.

La demande de brevet WO 2009/032032 A1 décrit la même structure constituée du métal NiCr absorbant le rayonnement solaire enfermé entre deux couches de nitrure de silicium, mais cette fois disposée entre les deux couches fonctionnelles en argent pour résoudre un problème de teinte lorsque le vitrage est observé en incidence oblique. Certains exemples ont subi un traitement de trempe thermique avec un variation de teinte ($\Delta E^*$) en réflexion côté substrat (extérieure) relativement faible ($\leq 3$). Une couche de mouillage en ZnO est aussi disposée sous les couches fonctionnelles en argent.

La demande de brevet WO 02/48065 A1 décrit dans certains exemples une couche absorbant le rayonnement solaire formée d'un nitrure, tel que TiN, enfermée entre deux couches de nitrure de silicium, l'ensemble étant disposé entre les deux couches fonctionnelles en argent. Une couche de mouillage en ZnO est aussi disposée sous les couches d'argent. Certains exemples peuvent subir un traitement thermique de trempe avec des modifications optiques relativement faibles.

La demande de brevet WO 2010/48065 décrit des vitrages transparents de contrôle solaire. Après traitement thermique à température élevée, notamment pour réaliser une trempe thermique, les vitrages de contrôle solaire selon ces propositions antérieures présentent un voile avec des taches inesthétiques, ce qui n'est pas acceptable sur le plan esthétique pour l'obtention d'un vitrage à haute qualité optique selon la demande commerciale.

## 3. Objectifs de l'invention

L'invention a notamment pour objectif de pallier cet inconvénient de l'art antérieur.

Plus précisément, un objectif de l'invention est de fournir un vitrage muni d'un empilage multicouches à propriété antisolaire susceptible de subir un traitement thermique à haute température sans détérioration de sa qualité optique.

Un objectif de l'invention est aussi de fournir un vitrage muni d'un empilage multicouches à propriétés antisolaire et esthétique qui soit apte à subir un traitement thermique à température élevée, de type trempe et/ou bombage, de préférence sans modification significative de sa teinte, en particulier en réflexion côté substrat, de la transmission lumineuse et énergétique totale et de la réflexion lumineuse totale et énergétique, côté substrat et côté empilage, de telle sorte qu'un vitrage non traité thermiquement puisse être juxtaposé avec sa version traitée thermiquement sans qu'un observateur puisse détecter une différence significative de l'aspect esthétique global. De préférence, la modification des propriétés optiques et énergétiques est inférieure à 6%, avantageusement inférieure à 4%, et idéalement inférieure à 2%.

L'invention, dans au moins un de ses modes de réalisation, a encore pour objectif de fournir un vitrage muni d'un empilage multicouches présentant une bonne stabilité du point de vue thermique, chimique et mécanique.

## 4. Exposé de l'invention.

L'invention se rapporte à un vitrage transparent de contrôle solaire selon la revendication 1. Les revêtements diélectriques, et en particulier la couche d'oxyde transparent intercalaire, doivent être capables de subir le traitement thermique imposé au substrat revêtu de l'empilement multicouche sans détérioration ni changement de structure significatif, et sans modification significative des propriétés opto-énergétique.

La couche de mouillage à base d'oxyde de zinc a un effet bénéfique sur la croissance cristalline de la couche fonctionnelle réfléchissant le rayonnement infrarouge à base d'argent et agit également favorablement sur la recristallisation de cette couche fonctionnelle pendant le traitement thermique à température élevée.

Par l'expression « à proximité immédiate », on entend dans la présente description que la couche fonctionnelle à base d'argent et la couche de mouillage sont dans le voisinage immédiat l'une de l'autre afin que la couche de mouillage à base d'oxyde de zinc puisse avoir un effet favorable sur la couche fonctionnelle, notamment au cours du dépôt de l'empilage, mais aussi pendant un traitement thermique à haute température, et notamment un effet bénéfique sur la structure cristalline de l'argent. Ceci n'exclut donc pas qu'il y ait une très fine couche d'un autre matériau interposée entre la couche de mouillage et la couche fonctionnelle, par exemple ayant une épaisseur géométrique d'au plus 1 nm. De préférence, la couche de mouillage est directement en contact avec cette dite couche fonctionnelle.

Par « couche absorbant le rayonnement solaire » aux fins de l'invention on entend une couche qui absorbe une partie du rayonnement visible, et qui consiste essentiellement en une matière dont le coefficient d'extinction spectrale $k(\lambda)$ est d'au moins 0,2, de préférence d'au moins 0,3, à la longueur d'onde 500 nm.

La présence d'une couche absorbant le rayonnement solaire permet de filtrer l'énergie thermique se trouvant dans la partie visible du spectre. En associant ce filtrage à la réflexion du rayonnement infrarouge obtenu grâce à la couche fonctionnelle, on parvient à obtenir des vitrages à contrôle solaire particulièrement efficace pour éviter l'échauffement des locaux ou habitacles soumis à un ensoleillement intensif. Cependant, lorsque le vitrage doit subir un traitement thermique à température élevée, notamment pour un traitement de renforcement mécanique à l'aide d'une trempe thermique, la couche absorbant le rayonnement solaire ne peut pas perdre son pouvoir d'absorption, sinon l'efficacité du contrôle solaire va nettement diminuer et les propriétés optiques du vitrage vont aussi être modifiées.

Les traitements thermiques, notamment de type bombage/trempe, peuvent aussi induire des modifications plus ou moins sensibles des propriétés optiques et notamment des teintes. Préférentiellement, ces variations doivent être minimisées de telle sorte que traités ou non thermiquement les vitrages présentent une apparence pratiquement inchangée.

Traditionnellement la mesure des variations colorimétriques s'effectue à partir des coordonnées du système CIELAB. La variation colorimétrique est exprimée par l'expression notée $\Delta E^*$, expression correspondant à la formule :

$$\Delta E^* = (\Delta L^{*2} + \Delta a^{*2} + \Delta b^{*2})^{1/2}$$

où $\Delta L^*$ représente la différence entre les coordonnées colorimétriques $L^*$ du vitrage avant et après traitement thermique,

$\Delta a^*$ représente la différence entre les coordonnées colorimétriques $a^*$ du vitrage avant et après traitement thermique,

$\Delta b^*$ représente la différence entre les coordonnées colorimétriques $b^*$ du vitrage avant et après traitement thermique,

Plus particulièrement, et de préférence, le vitrage selon l'invention présente une variation colorimétrique en réflexion côté face substrat verrier, $\Delta E^*_{Rg}$:

$$\Delta E^*_{Rg} = (\Delta L^*_{Rg}{}^2 + \Delta a^*_{Rg}{}^2 + \Delta b^*_{Rg}{}^2)^{1/2}$$

inférieure à 8, préférentiellement inférieure à 5, avantageusement inférieure à 3, et même préférentiellement inférieure à 2, lorsque ledit vitrage est soumis à une température d'au moins 630°C et d'au plus 670°C pendant 7 à 10 minutes.

De manière additionnelle, le vitrage selon l'invention présente aussi, de préférence, une variation colorimétrique en transmission, $\Delta E^*_{TL}$:

$$\Delta E^*_{TL} = (\Delta L^*_{TL}{}^2 + \Delta a^*_{TL}{}^2 + \Delta b^*_{TL}{}^2)^{1/2}$$

inférieure à 8, préférentiellement inférieure à 5, plus préférentiellement inférieure à 3, lorsque ledit vitrage est soumis à une température d'au moins 630°C et d'au plus 670°C pendant 7 à 10 minutes.

Le vitrage selon l'invention présente de manière additionnelle ou non aux deux propriétés précédentes, une variation colorimétrique en réflexion côté face empilage, $\Delta E^*_{Rc}$, telle que :

$$\Delta E^*_{Rc} = (\Delta L^*_{Rc}{}^2 + \Delta a^*_{Rc}{}^2 + \Delta b^*_{Rc}{}^2)^{1/2}$$

inférieure 8, préférentiellement inférieure à 5, lorsque ledit vitrage est soumis à une température d'au moins 630°C et d'au plus 670°C pendant 7 à 10 minutes.

De préférence, l'absorption lumineuse, donc l'absorption du rayonnement solaire dans la partie visible du spectre, due à la couche absorbant le rayonnement solaire, mesurée en déposant uniquement cette couche absorbante enfermée entre ses deux couches diélectriques sur du verre clair ordinaire de 4 mm d'épaisseur, mesurée côté verre, est comprise entre 5% et 45%, de préférence entre 10% et 35%.

Pour éviter la modification des propriétés optiques de l'empilage et la perte de pouvoir absorbant de la couche absorbant le rayonnement solaire, on insère cette dernière entre deux couches diélectriques formées d'un matériau choisi parmi les nitrures de silicium ou d'aluminium et leur mélange. L'épaisseur géométrique minimale de chacune de ces couches diélectriques est de 8 nm.

On a constaté que, de manière surprenante, la succession selon l'invention « nitrure de silicium ou d'aluminium ou leur mélange / couche absorbant le rayonnement solaire / nitrure de silicium ou d'aluminium ou leur mélange / oxyde transparent intercalaire / couche de mouillage à base d'oxyde de zinc / couche fonctionnelle réfléchissant le rayonnement infrarouge à base d'argent » permet de réduire fortement, ou d'éviter, la formation du voile avec des taches que l'on observe avec les propositions de l'art antérieur. La couche d'oxyde transparent intercalaire joue un rôle fondamental, mais la raison de cet effet bénéfique n'est pas encore bien comprise. On a constaté également que sans cette couche d'oxyde transparent intercalaire, la résistance électrique superficielle, et donc également l'émissivité, avait tendance à augmenter de manière indésirable suite au traitement thermique, alors que grâce à la présence de cette couche d'oxyde intercalaire l'émissivité était au moins conservée, voire réduite de manière bénéfique, à la suite du traitement thermique.

L'ajout d'une couche d'oxyde à proximité de la couche absorbant le rayonnement solaire est surprenante car le risque d'oxydation de la couche absorbante lors du traitement thermique est fortement augmenté et il y a donc un risque significatif de perte des propriétés d'absorption et de modification des propriétés optiques en cours de traitement. On a constaté que, de manière surprenante, il n'en est rien et qu'au contraire, la qualité optique est conservée après traitement thermique. D'autre part, à cause de la couche absorbant le rayonnement solaire enfermée entre deux couches diélectriques de nitrure et de la couche de mouillage pour la couche fonctionnelle, la structure du revêtement diélectrique contenant la couche absorbant le rayonnement solaire comprend déjà une succession de beaucoup de couches différentes, ce qui complique le processus de fabrication sur un dispositif industriel. L'ajout d'une couche supplémentaire d'oxyde intercalaire, particulièrement dans ce revêtement-là, accroît encore cette difficulté. Nous avons découvert que, de manière surprenante, l'effet bénéfique qui en découle sur la qualité optique après traitement thermique du vitrage revêtu justifiait amplement la gestion de cette difficulté de fabrication.

La couche d'oxyde transparent intercalaire peut par exemple être formé par du $SnO_2$ ou du $TiO_2$. La couche d'oxyde transparent intercalaire est à base d'un oxyde choisi parmi l'oxyde mixte de zinc et d'étain ou l'oxyde mixte de titane et de zirconium. Ces deux oxydes, et en particulier l'oxyde mixte de zinc et d'étain, en tant que couche d'oxyde intercalaire, permettent d'obtenir les meilleurs résultats pour ce qui est de l'élimination des taches dans l'aspect optique après traitement thermique à température élevée, ainsi que pour la conservation, voire la diminution, de la résistance électrique et donc de l'émissivité. L'oxyde mixte de zinc-étain comprend entre 40% et 60% d'étain. L'oxyde mixte de titane-zirconium comprend de préférence entre 25% et 75% de zirconium.

De préférence, la couche d'oxyde transparent intercalaire a une épaisseur géométrique comprise entre 1 et 35 nm, avantageusement entre 3 et 25 nm, et préférentiellement comprise entre 3 et 12 nm. Cette épaisseur permet d'obtenir un effet favorable sur la qualité optique tout en préservant les autres propriétés de l'empilage et en s'accommodant aisément des contraintes de fabrication et les possibilité du dispositif de dépôt de couche. L'épaisseur adéquate dépend aussi de l'emplacement de la couche absorbante, elle doit être adaptée au mieux à la configuration. Par exemple, lorsque la couche absorbante se trouve dans le premier revêtement diélectrique, l'épaisseur sera relativement faible car l'épaisseur totale du premier revêtement diélectrique est en général relativement mince. Par contre, si la couche absorbante se trouve dans le second revêtement diélectrique, son épaisseur pourra être un peu plus importante car la place disponible est plus grande. Cette couche d'oxyde transparent intercalaire peut aussi être multiple, c'est-à-dire formée de deux oxydes différents, par exemple de l'oxyde mixte zinc-étain suivi d'une très fine couche d'oxyde mixte titane-zirconium.

De préférence, les couches diélectriques enfermant la couche absorbant le rayonnement solaire sont à base de nitrure de silicium, et avantageusement essentiellement en nitrure de silicium, c'est-à-dire à plus de 90%, voire 95% et même 98%, de nitrure de silicium. De manière classique, le nitrure de silicium peut être obtenu à partir d'une cible de silicium, éventuellement dopée à l'aluminium ou au bore, par pulvérisation cathodique, à l'aide d'un magnétron, dans une atmosphère réactive d'azote et d'argon. La cible de silicium est dopée pour lui conférer la conduction électrique nécessaire à la pulvérisation cathodique, par exemple dopée à au plus 10% en poids d'aluminium ou de bore, par exemple entre 2% et 4%. Les couches de nitrure de silicium dans l'empilage fini peuvent être légèrement oxydée sur une partie de leur épaisseur. Ces couches de nitrures de silicium peuvent aussi être plus riches en silicium que la stoechiométrie théorique. Elles ont une épaisseur géométrique minimum de 8 nm.

Selon un premier mode de réalisation, la couche absorbant le rayonnement solaire est essentiellement sous forme métallique. Bien qu'essentiellement sous forme métallique, le métal peut présenter des traces de nitruration dues à l'atmosphère de dépôt polluée par l'azote des zones de dépôt voisines. Il peut s'agir de fuites d'azote provenant des chambres de dépôt des nitrures qui entourent la couche absorbante, ou la cible métallique peut être disposée dans la même chambre de dépôt que les cible de silicium destinée à former les nitrures de silicium, sachant que l'azote sera prioritairement attirée par le silicium. De nombreux métaux peuvent être utilisés, comme par exemple le palladium, le niobium, le tungstène, l'acier inoxydable, le titane, le chrome, le molybdène, le zirconium, le nickel, le tantale, le zinc, des alliages comme NiCr, NiCrW, WTa, WCr, NbZr, TaNiV, CrZr et NbCr, pour n'en citer que quelques-uns. De préférence, la couche absorbant le rayonnement solaire est un métal choisi parmi les alliages NiCr, NiCrW, WTa, WCr, NbZr, TaNiV, NbCr, CrZr et NiV, avantageusement NiCrW et CrZr. On a trouvé que ces alliages métalliques convenaient particulièrement bien dans le cadre de l'invention pour allier à la fois la qualité optique après traitement thermique, les performances énergétiques et la durabilité chimique et mécanique de l'empilage.

L'alliage NiCrW comprend de préférence au moins 30% en poids de tungstène, préférentiellement au moins 35%, et avantageusement au moins 37% ou au moins 40%. La proportion de nickel dans cet alliage est d'au moins 9% en poids, de préférence d'au moins 20% en poids et avantageusement d'au moins 25% en poids, par exemple 30, 35 ou 40% en poids. Dans l'alliage NiCrW, la proportion Ni par rapport à Cr est de préférence une proportion allant de 90/10 à 50/50, avantageusement environ 80% de Ni pour 20% de Cr. La proportion de NiCr par rapport au tungstène, dans l'alliage NiCrW, peut varier fortement, mais de préférence elle varie entre 10% de NiCr pour 90% de W et 65% de NiCr pour 35% de tungstène, avantageusement entre 40% de NiCr pour 60% de W et 63% de NiCr pour 37% de W.

L'alliage CrZr comprend de préférence au moins 25% en poids de chrome et au moins 20% en poids de zirconium. De préférence, la couche comprend au moins 35%, et avantageusement au moins 40% et même au moins 45% en poids de zirconium. De préférence, l'alliage comprend entre 20 et 75% en poids de zirconium, avantageusement entre 25 et 75% ou entre 30 et 75% en poids de zirconium, et favorablement entre 45 et 65% en poids de zirconium

Selon un second mode de réalisation, la couche absorbant le rayonnement solaire est un nitrure ou un sous-nitrure, c'est-à-dire un nitrure sous-stoechiométrique en azote. Différent nitrures absorbants peuvent être utilisés, pour autant bien entendu qu'ils ne soient pas transparents. On pourrait notamment citer le nitrure de zinc, le nitrure de palladium et le nitrure d'inox, pour n'en citer que quelques-uns, toutefois ils présentent des désavantages du point de vue de la conservation de leurs propriétés opto-énergétiques pendant le traitement thermique à température élevée. De préférence, la couche absorbant le rayonnement solaire est un nitrure choisi parmi TiN, NiCrWN, NiVN, TaN, CrN, ZrN, CrZrN, TiAlN, TiZrN, WN, SiZrN et SiNiCrN, et avantageusement choisi parmi TiN et NiCrWN. On a trouvé aussi que ces nitrures métalliques, et en particulier TiN et NiCrWN convenaient particulièrement bien dans le cadre de l'invention pour allier à la fois la qualité optique après traitement thermique, les performances énergétiques et la durabilité chimique et mécanique de l'empilage.

Pour le nitrure NiCrWN, les proportions respectives préférées des différents élément Ni, Cr et W sont les mêmes qu'indiquées ci-avant pour l'alliage métallique NiCrW, en ne tenant pas compte de la présence de l'azote.

L'empilage peut comprendre une seule couche fonctionnelle à base d'argent. Dans ce mode de réalisation, la couche absorbant le rayonnement solaire se trouve disposée entre le substrat et la dite couche fonctionnelle, cette dernière étant déposée sur une couche de mouillage à base d'oxyde de zinc. On peut ainsi obtenir un vitrage procurant une protection solaire efficace de fabrication relativement simple.

De préférence, l'empilage comprend au moins deux couches fonctionnelles réfléchissant le rayonnement infrarouge à base d'argent. Ce mode de réalisation permet d'obtenir une vitrage plus sélectif, c'est-à-dire qui présente un facteur solaire faible, donc empêche l'entrée de chaleur, tout en conservant une transmission lumineuse relativement élevée.

Dans des modes de réalisation particulièrement avantageux, l'empilage comprend trois, voire quatre, couches fonctionnelles à base d'argent. La sélectivité des vitrages portant ces empilages est ainsi encore nettement améliorée.

Lorsque l'empilage comporte deux couches fonctionnelles à base d'argent, la couche absorbant le rayonnement solaire peut être disposée soit entre le substrat et la première couche fonctionnelle, soit entre les deux couches fonctionnelles.

Dans un premier mode de réalisation, la couche absorbant le rayonnement solaire se trouve entre le substrat et la première couche fonctionnelle. Il faut noter ici que dans les vitrages de contrôle solaire du type de l'invention, l'empilage multicouches est disposé en position 2, c'est-à-dire que le substrat revêtu se trouve côté extérieur au local et que le rayonnement solaire traverse le substrat puis l'empilage. Ce mode de réalisation permet d'obtenir des vitrages de contrôle solaire performants, mais il présente cependant l'inconvénient d'absorber assez bien de rayonnement calorifique et a donc tendance à s'échauffer. Dans le cas de vitrages à faible transmission lumineuse, cet échauffement peut être tel qu'il est nécessaire de faire un traitement thermique de renforcement mécanique pour chaque vitrage.

De préférence, selon un second mode de réalisation, la couche absorbant le rayonnement solaire se trouve entre les deux couches fonctionnelles à base d'argent. Dans ce second mode de réalisation, une partie du rayonnement solaire calorifique est réfléchi par la première couche d'argent et l'absorption énergétique de l'empilage est moins élevée que dans le premier mode de réalisation. De plus, la réflexion lumineuse intérieure est plus faible, ce qui réduit l'effet « miroir » à l'intérieur du local et améliore la visibilité au travers du vitrage.

Lorsque l'empilage comporte trois couches fonctionnelles, aux deux premiers modes de réalisation ci-dessus vient s'ajouter la possibilité de disposer la couche absorbant le rayonnement solaire entre la deuxième et la troisième couches fonctionnelles. Il en est de même lorsque l'empilage comporte quatre couches fonctionnelles, mais avec une possibilité supplémentaire. Dans tous les modes de réalisation, l'absorption énergétique AE (selon la norme EN410) du substrat verrier revêtu de l'empilage multicouches est inférieure à 50%, de préférence inférieure à 45%, et avantageusement inférieure à 40%. On peut ainsi éviter plus aisément l'obligation de tremper tous les vitrages d'une même façade ou d'un même immeuble, et de ne tremper que ceux qui risque de subir des contraintes thermiques dues à des zones d'ombre.

D'une manière générale, chaque revêtement diélectrique peut comprendre une couche diélectrique transparente habituellement utilisée dans le domaine tel que, pour n'en citer que quelques-unes, $TiO_2$, $SiO_2$, $Si_3N_4$, $SiO_xN_y$, $Al(O)N$, $Al_2O_3$, $SnO_2$, $ZnAlO_x$, $Zn_2SnO_4$, ITO, un oxyde mixte de Ti et de Zr ou de Nb, etc.... Les couches diélectriques sont généralement déposées par pulvérisation cathodique sous pression réduite assistée par champ magnétique (magnétron), mais elles peuvent aussi être déposées par la technique bien connue appelée PECVD («Plasma-Enhanced Chemical Vapor Deposition») ou dépôt chimique en phase vapeur assisté par plasma.

En particulier, la première couche diélectrique déposée sur et au contact du substrat verrier peut être un nitrure, tel que du nitrure de silicium ou d'aluminium. De préférence, la première couche diélectrique en contact avec le substrat verrier est une couche constituée d'un oxyde, et avantageusement une couche d'oxyde d'au moins un élément choisi parmi Zn, Sn, Ti, Zr et leurs alliages. On a trouvé que ceci améliore en particulier la durabilité chimique du produit non traité thermiquement. On peut par exemple utiliser une couche d'oxyde de titane, notamment appréciée pour son indice de réfraction élevé.

De préférence, la première couche diélectrique, du premier revêtement diélectrique, déposée sur le substrat verrier, et en contact avec lui, est une couche d'oxyde mixte zinc-étain, avantageusement contenant au moins 20% d'étain, plus préférentiellement encore une couche d'oxyde mixte zinc-étain dans laquelle la proportion zinc-étain est proche du 50-50 % poids ($Zn_2SnO_4$). Cette disposition est avantageuse pour la résistance au traitement thermique à haute température. L'oxyde mixte zinc-étain forme une barrière excellente aux ions alcalins migrant du substrat verrier à la température élevée du traitement thermique, de trempe notamment. Il présente et conserve aussi une bonne adhésion vis-à-vis du substrat verrier. Il présente en outre un bon taux de dépôt, comparé, par exemple, au $SiO_2$ ou à l'$Al_2O_3$ et il présente une bonne durabilité, comparé, par exemple, au ZnO pur ou à l'oxyde de bismuth. Il peut, en outre, être avantageux en ce qu'il a moins tendance à générer un voile après traitement thermique de l'empilage, comparé, par exemple, aux oxydes de Ti ou Zr. La couche constituée d'un oxyde, en contact direct avec le substrat, présente de façon avantageuse une épaisseur d'au moins 5 nm, de préférence d'au moins 8 nm, plus préférentiellement d'au moins 10 nm. Ces valeurs d'épaisseurs minimales permettent, entre autre, d'assurer la durabilité chimique du produit non traité thermiquement, mais aussi d'assurer la résistance au traitement thermique.

De préférence, chaque revêtement diélectrique comprend une couche d'oxyde mixte zinc-étain. La présence de cette couche dans chacun des revêtements diélectriques favorise la bonne tenue de l'empilage au traitement thermique à température élevée.

De préférence, la dernière couche diélectrique du dernier revêtement diélectrique supérieur est une couche de nitrure de silicium ou une couche de $SiO_2$. Cette couche favorise l'isolation chimique, notamment vis-à-vis de l'oxygène, de l'empilage par rapport à l'atmosphère extérieur, en particulier pendant une traitement thermique à température élevée. Ceci favorise la préservation des propriétés optiques de l'empilage au cours du traitement thermique. Ceci n'exclut toutefois pas de disposer une fine couche de protection sur cette dernière couche de nitrure ou d'oxyde de silicium, qui n'agit pratiquement pas comme couche diélectrique avec un effet interférentiel, mais qui assure un autre but, par exemple de protection mécanique, telle qu'une fine couche d'oxyde mixte titane-zirconium par exemple.

Une couche de protection, ou couche « barrière », est de préférence déposée directement sur la couche fonctionnelle à base d'argent, ou sur chacune des couches fonctionnelles s'il y en a plusieurs. Il peut s'agir d'une couche métallique, appelée aussi en générale « couche sacrificielle » de manière connue dans le domaine, par exemple une fine couche de Ti, NiCr, Nb, Ta, déposée à partir d'une cible métallique en atmosphère neutre et destinée à préserver l'argent lors du dépôt de la couche diélectrique suivante, lorsque celle-ci est en oxyde, et pendant le traitement thermique. Il peut s'agir aussi d'une couche TiOx déposée à partir d'une cible céramique en atmosphère pratiquement neutre, ou d'une couche de NiCrOx.

De préférence, la ou les couches de protection déposées directement sur la ou les couches fonctionnelles à base d'argent sont en ZnO, éventuellement dopé à l'aluminium (ZnAlOx), obtenu à partir d'une cible céramique, soit dopée à l'aluminium soit sous-stoechiométrique soit en ZnO pur appelé aussi ZnO-intrinsèque ou iZnO, et déposée en atmosphère relativement neutre, c'est-à-dire une atmosphère d'argon pur ou éventuellement avec maximum 20% d'oxygène. Une telle couche de protection de la ou des couches fonctionnelles présente l'avantage d'améliorer la transmission lumineuse de l'empilage et a un effet bénéfique sur les propriétés de la couche fonctionnelle à base d'argent, notamment en ce qui concerne l'émissivité et la tenue mécanique. Une telle couche de protection de la couche fonctionnelle présente aussi l'avantage d'atténuer le risque de modification de la transmission lumineuse totale au cours du traitement thermique à température élevée. Une variation de la transmission lumineuse en cours de traitement thermique de moins de 6%, de préférence moins de 4% et avantageusement de moins de 2%, est ainsi plus facilement atteinte.

Chaque couche fonctionnelle à base d'argent est de préférence déposée sur une couche de mouillage à base d'oxyde de zinc. La croissance cristallographique de la couche fonctionnelle sur la couche de mouillage est ainsi favorable pour l'obtention d'une faible émissivité et d'une bonne tenue mécanique des interfaces.

De préférence, la transmission lumineuse totale TL du vitrage transparent portant l'empilage multicouches déposé sur un substrat verrier en verre clair sodo-calcique ordinaire de 4 mm d'épaisseur est comprise entre 25% et 72%, de préférence entre 35% et 68%.

Bien entendu, le substrat verrier peut être un verre teinté dans la masse, tel qu'un verre gris, bleu ou vert, pour absorber encore plus le rayonnement solaire, ou pour former un espace privé à faible transmission lumineuse afin de dissimuler l'habitacle du véhicule, ou un bureau dans un bâtiment, aux regards externes, ou pour fournir un effet esthétique particulier. Le substrat verrier peut aussi être un verre extra clair à très haute transmission lumineuse. Dans ce cas il n'absorbera que très peu le rayonnement solaire.

L'invention s'étend à un vitrage feuilleté comprenant un vitrage transparent selon l'invention tel que décrit ci-dessus, dont l'empilage multicouches peut être en contact avec la matière adhésive thermoplastique reliant les substrats, en général, du PVB.

L'invention s'étend aussi à un vitrage multiple isolant comprenant un vitrage transparent selon l'invention tel que décrit ci-dessus, par exemple un vitrage double ou triple avec l'empilage multicouches disposé face à l'espace clos à l'intérieur du vitrage multiple.

De préférence, le facteur solaire g, mesuré selon la norme EN410, est compris entre 12% et 40%, avantageusement entre 20% et 36%, pour un vitrage double 6/15/4 en verre clair. Le vitrage double est donc formé d'une première feuille de verre clair sodo-calcique ordinaire de 6 mm d'épaisseur portant l'empilage multicouches en position 2, c'est-à-dire sur la face interne du vitrage double, séparée d'une autre feuille de verre clair de 4 mm d'épaisseur, sans empilage, par un espace clos de 15 mm d'épaisseur rempli d'argon. Un tel vitrage double permet un contrôle solaire très efficace.

De préférence, en vitrage multiple, la sélectivité, exprimée sous forme de la transmission lumineuse TL par rapport au facteur solaire g, est d'au moins 1,4, avantageusement d'au moins 1,5, préférentiellement d'au moins 1,6. Une valeur élevée de la sélectivité exprime que malgré un facteur solaire efficace qui réduit fortement la quantité d'énergie calorifique provenant du soleil et pénétrant dans le local via le vitrage, la transmission lumineuse reste aussi élevée que possible pour permettre l'éclairage du local.

L'invention s'étend encore à l'utilisation du vitrage transparent de contrôle solaire comportant sur au moins l'une des faces d'un substrat verrier un empilage multicouches transparent tel que décrit ci-avant, pour obtenir un vitrage muni de l'empilage multicouches dont la variation des propriétés optiques $\Delta E^*$ en transmission et en réflexion côté substrat suite à un traitement thermique de trempe ou de bombage est inférieure à 5, de préférence inférieure à 2,5 et avantageusement inférieure à 2.

## 5. Description de modes préférés de réalisation de l'invention

Des exemples d'empilages multicouches déposés sur un substrat verrier pour former des vitrages selon l'invention, mais également des exemples comparatifs (« C »), sont donnés dans les tableaux 1 à 6 ci-après. Les propriétés sont données au tableau 7 et sont définies pour un vitrage simple dont le substrat est en verre "float" ordinaire clair de 4 mm d'épaisseur, sauf indication contraire. Les couches sont dans l'ordre, de gauche à droite, en partant du verre. Les épaisseurs géométriques approximatives sont exprimées en nm.

Les couches absorbant le rayonnement solaire et les couches diélectriques sont appliquées par une technique de pulvérisation cathodique ("sputtering") dans des conditions usuelles pour ce type de technique. Les couches métalliques sont déposées en atmosphère neutre d'argon. Les nitrures sont déposés en atmosphère réactive d'azote et d'argon. Les couches AZO sont déposées, à partir d'une cible céramique d'oxyde de zinc dopé à 2% d'aluminium, sous une atmosphère neutre d'argon. Les autres oxydes sont déposés à partir d'une cible métallique sous une atmosphère réactive d'oxygène et d'argon. En variante, les couches diélectriques sont appliquées par la technique bien connue appelée PECVD (« Plasma-Enhanced Chemical Vapor Deposition») ou dépôt chimique en phase vapeur assisté par plasma.

Les couches diélectriques de nitrure de silicium sont produites à partir de cibles métalliques dans une atmosphère constituée d'un mélange d'argon (30-70%) et d'azote (70-30%) sous une pression totale de 4mTorr (0,53Pa).

Les couches de chrome-zirconium (40% en poids de Cr et 60% de zirconium dans l'alliage CrZr), les couches de nickel-chrome (Nickel/Chrome 80/20)-tungstène (50% en poids de NiCr et 50% de W dans l'alliage NiCrW) sont déposées à partir de cathodes métalliques en atmosphère d'argon seul. En variante, l'atmosphère de dépôt de ces alliages métalliques CrZr et NiCrW comprend un peu d'azote provenant des zones de dépôt voisines. Il en résulte que la couche CrZr ou NiCrW formée, tout en conservant son caractère essentiellement métallique, contient un peu d'azote. Les propriétés obtenues sont similaires.

Dans les tableaux, les notations SiN désignent les nitrures de silicium sans représenter une formule chimique, étant entendu que les produits obtenus ne sont pas nécessairement rigoureusement stoechiométriques, mais sont ceux obtenus dans les conditions de dépôt indiquées et qui sont voisins des produits stoechiométriques. Les couches en SiN peuvent contenir jusqu'à environ maximum 10% en poids d'aluminium provenant de la cible.

Dans les tableaux, B représente une couche barrière contre l'oxydation de l'argent bien connue dans le domaine ; AZO représente une couche barrière à base d'oxyde de zinc, éventuellement dopé à l'aluminium, déposée à partir d'une cible (cathode) céramique d'oxyde de zinc (i-ZnO, appelé ZnO intrinsèque, ou ZnO dopé à l'aluminium) pulvérisée en atmosphère à base d'argon avec peu ou pas d'oxygène ; D représente une ou plusieurs couches diélectriques, notamment à base de stannate de zinc, de ZnO dopé ou non, ou d'un autre matériau connu dans le domaine et adapté à ce type d'empilage de couche, par exemple un nitrure tel qu'AlN. En variante, AZO peut être remplacé par d'autres barrières bien connues dans le domaine et adaptées aux propriétés désirées pour le système de couche formé, comme par exemple un oxyde de Ti, dopé ou non avec du niobium ou du zirconium, obtenu de préférence à partir d'une cible céramique formée de l'oxyde à déposer, ou ZnO pur. L'appellation « TZO » représente un oxyde mixte comprenant 50% de $TiO_2$ et 50% de $ZrO_2$. M représente la couche de mouillage à base de ZnO, dopé à l'aluminium ou non. IR représente les couches fonctionnelles réfléchissant le rayonnement infrarouge. ABS représente la couche absorbant le rayonnement solaire. L'appellation ZSO5 représente un oxyde mixte zinc-étain formé à partir d'une cathode d'un alliage zinc-étain à 52% en poids de zinc et 48% en poids d'étain pour former la structure spinelle de stannate de zinc $Zn_2SnO_4$. L'appellation $TZO_{65}$ signifie un oxyde mixte titane-zirconium avec 35% de zirconium et 65% de titane, différent de TZO (50/50).

Le tableau 1 donne des exemples de vitrages selon l'invention dans lesquels la couche absorbant le rayonnement solaire d'empilages à deux couches fonctionnelles à base d'argent se trouve dans le premier revêtement diélectrique. Il s'agit ici d'un métal tel qu'indiqué dans le tableau : NiCrW ou CrZr.

En variante des exemples donnés au tableau 1, une couche finale de protection TZO de 3 nm d'épaisseur recouvre la dernière couche de nitrure de silicium. La durabilité mécanique est ainsi renforcée.

Le tableau 2 donne des exemples de vitrages selon l'invention dans lesquels la couche absorbant le rayonnement solaire d'empilages à deux couches fonctionnelles à base d'argent se trouve également dans le premier revêtement diélectrique, mais il s'agit cette fois d'un nitrure tel qu'indiqué dans le tableau : TiN ou ZrN.

Le tableau 3 donne un exemple de vitrage selon l'invention dans lequel la couche absorbant le rayonnement solaire (NiCrW) se trouve également dans le premier revêtement diélectrique, mais il s'agit cette fois d'un empilage à trois couches d'argent. Le substrat est ici un verre clair sodo-calcique ordinaire de 6 mm d'épaisseur.

Le tableau 4 donne des exemples de vitrages selon l'invention dans lesquels la couche absorbant le rayonnement solaire d'empilages à deux couches fonctionnelles à base d'argent se trouve dans le second revêtement diélectrique. Il s'agit ici d'un métal tel qu'indiqué dans le tableau : NiCrW ou CrZr.

Les exemples du tableau 5 sont similaires à ceux du tableau 4 mais pour différents nitrures en tant que couche absorbant le rayonnement solaire, tel qu'indiqué dans le tableau.

Le tableau 6 donne un exemple à trois couches fonctionnelle d'argent avec la couche absorbant le rayonnement solaire (NiCrW) dans le second revêtement diélectrique. Le substrat est ici un verre clair sodo-calcique ordinaire de 6 mm d'épaisseur.

Le tableau 7 donne les différentes propriétés des différents exemples.

Sur les échantillons on mesure la transmission lumineuse TL et la réflexion lumineuse avec l'Illuminant D65, 2°. Les coordonnées colorimétriques L*, a*, b*, CIE, sont également mesurées avant et après traitement thermique avec l'Illuminant D65, 10°. L'angle sous lequel les mesures sont faites est de 8°. La valeur du facteur solaire (g), mesurée selon la norme EN 410, est de 37 pour les exemples 11, 12 et 37,5 pour l'exemple 53.

Les échantillons sont soumis à un traitement thermique comprenant le maintien à 670°C pendant 7 min et 30 sec. Les variations de transmission et de réflexion en $\Delta E^*$, soit en transmission $\Delta E^*_{Tl}$, soit en réflexion côté couche ($\Delta E^*_{Rc}$), soit en réflexion côté substrat verrier ($\Delta E^*_{Rg}$), sont également données dans le tableau 7. Les valeurs Y (qui représentent soit la transmission lumineuse totale, soit la réflexion lumineuse totale) sont aussi indiquées (en %) en transmission (TL), en réflexion côté substrat verrier (Rg) et en réflexion côté systèmes de couches (Rc) après traitement thermique. La variation de la transmission lumineuse totale ($\Delta_{TL}$), et la variation de la réflexion totale côté substrat verrier ($\Delta_{Rg}$) et côté système de couches ($\Delta_{Rc}$) sont aussi indiquées dans le tableau 7. Pour les exemples 11, 12 et 53, les valeurs Y et L*, a*, b* sont données avant traitement thermique.

On constate que pour les exemples comparatifs C1 et C2, qui n'ont pas d'oxyde transparent intercalaire selon l'invention, il y a apparition de taches colorées inadmissibles suite au traitement thermique à température élevée. Ce phénomène rédhibitoire n'apparait pas avec les vitrages selon l'invention. On notera aussi que les exemples 8, 11 et 12 ne sont pas conformes à l'invention.

Les taches qui apparaissent suite au traitement thermique et qui sont rédhibitoires pour la commercialisation d'un produit de qualité, sont des zones d'un diamètre d'environ 5 à 10 mm qui sont visibles à l'oeil nu à une distance d'environ 60 cm. Il s'agit de taches de teinte différente du reste de l'empilage qui donne un aspect inesthétique et désagréable à l'oeil. Lorsqu'elles sont visible à l'oeil nu à une distance de 60 cm, le vitrage revêtu est déclassé et inacceptable pour la vente.

La résistance électrique spécifique de l'empilage est également plus élevée pour l'exemple comparatif C2 par rapport à l'exemple 41 qui a une structure similaire mais sans la couche d'oxyde transparent intercalaire. Pour l'exemple C2, la résistance électrique spécifique Rs, exprimée en ohms par carré, est de 1,74 $\Omega/\square$ après traitement thermique alors qu'elle est de 1,55 $\Omega/\square$ avant traitement thermique. Par comparaison, la résistance Rs de l'exemple 41 avant traitement thermique est de 1,51 $\Omega/\square$ et elle est réduite à 1,12 $\Omega/\square$ après traitement thermique. La résistance électrique spécifique Rs de l'exemple 11 avant traitement thermique est de 1,13 Ω/□ ; celle de l'exemple 53 est de 1,3 Ω/□.

Le tableau 8 ci-après donne les propriétés optiques et thermique de quelques exemples installés en vitrage double (6/15/4). Ce vitrage double est formé d'une première feuille extérieure de verre clair sodo-calcique ordinaire de 6 mm d'épaisseur portant l'empilage multicouches en position 2, c'est-à-dire sur la face interne du vitrage double, séparée d'une autre feuille de verre clair de 4 mm d'épaisseur, sans empilage, par un espace clos de 15 mm d'épaisseur rempli d'argon. L'empilage multicouches n'a pas subis de traitement thermique. Outre les propriétés optiques, le tableau 8 donne également le facteur solaire g, selon la norme EN140, l'absorption énergétique AE, la transmission énergétique TE, selon la norme EN410, et la sélectivité S exprimée selon le rapport de la transmission lumineuse TL au facteur solaire g.

Bien entendu, l'invention n'est pas limitée aux exemples de réalisation mentionnés dans la présente description.

Tableau 1.

| Ex. | D1a | ABS | D1b | | M | IR1 | B | D2 | | | M | IR2 | B | D3 | |
|---|---|---|---|---|---|---|---|---|---|---|---|---|---|---|---|
| | SiN | NiCrW | SiN | ZSO5 | ZnO | Ag | AZO | ZSO5 | SiN | ZSO5 | ZnO | Ag | AZO | ZSO5 | SiN |
| 1 | 10 | 0,8 | 10 | 9,4 | 5 | 12,4 | 2,5 | 20 | 35 | 20 | 5 | 14,6 | 2,5 | 14 | 20 |
| 2 | 10 | 1,4 | 10 | 4 | 5 | 14,5 | 2,5 | 20 | 35 | 20 | 5 | 14,6 | 2,5 | 14,4 | 20 |
| 3 | 10 | 2,7 | 10 | 4 | 5 | 14,5 | 2,5 | 20,8 | 35 | 15 | 5 | 14,9 | 2,5 | 14,3 | 20 |
| | SiN | CrZr | SiN | ZSO5 | ZnO | Ag | AZO | ZSO5 | SiN | ZSO5 | ZnO | Ag | AZO | ZSO5 | SiN |
| 4 | 10 | 1,4 | 10 | 4 | 5 | 14,5 | 2,5 | 20 | 35 | 20 | 5 | 14,6 | 2,5 | 14,4 | 20 |

Tableau 2.

| Ex. | D1a | ABS | D1b | | M | IR1 | B | D2 | | | M | IR2 | B | D3 | |
|---|---|---|---|---|---|---|---|---|---|---|---|---|---|---|---|
| | SiN | TiN | SiN | ZSO5 | ZnO | Ag | AZO | ZSO5 | SiN | ZSO5 | ZnO | Ag | AZO | ZSO5 | SiN |
| 5 | 10 | 7 | 10 | 3,5 | 4 | 12 | 5 | 24,6 | 35 | 19,8 | 5 | 13,8 | 5 | 7,5 | 28 |
| 6 | 10 | 9 | 10 | 3,5 | 4 | 14 | 5 | 25,3 | 35 | 20,5 | 5 | 13,8 | 5 | 7,5 | 28 |
| 7 | 10 | 12 | 10 | 3,5 | 4 | 14 | 5 | 21,8 | 35 | 18 | 5 | 13,8 | 5 | 7,5 | 28 |
| 8 | 10 | 7,7 | 10 | 2,5 | 3 | 15,4 | 5 | 24,3 | 35 | 19,5 | 5 | 16,1 | 5 | 7,3 | 28 |
| | SiN | ZrN | SiN | ZSO5 | ZnO | Ag | AZO | ZSO5 | SiN | ZSO5 | ZnO | Ag | AZO | ZSO5 | SiN |
| 9 | 10 | 11 | 10 | 3,5 | 4 | 14 | 5 | 25,3 | 35 | 20,5 | 5 | 13,8 | 5 | 7,5 | 28 |
| 10 | 10 | 14 | 10 | 3,5 | 4 | 14 | 5 | 21,8 | 35 | 18,0 | 5 | 13,8 | 5 | 7,5 | 28 |

Tableau 3.

| Ex. | D1a | ABS | D1b | | M | IR1 | B | D2 | | | M | IR2 | B | D3 | | | M | IR3 | B | D4 | |
|---|---|---|---|---|---|---|---|---|---|---|---|---|---|---|---|---|---|---|---|---|---|
| | SiN | NiCrW | SiN | ZSO5 | ZnO | Ag | AZO | ZSO5 | SiN | ZSO5 | ZnO | Ag | AZO | ZSO5 | SiN | ZSO5 | ZnO | Ag | AZO | ZSO5 | SiN |
| 11 | 16,2 | 1,8 | 13,4 | 1,1 | 5 | 11,5 | 4 | 20 | 20 | 21,1 | 5 | 15,2 | 4 | 15 | 17 | 29,1 | 5 | 16,2 | 4 | 14 | 18 |
| 12 | 16,2 | 1,8 | 13,4 | 1,1 | 5 | 11,5 | 4 | 61.1 | 0 | 0 | 5 | 15,2 | 4 | 32 | 0 | 29,1 | 5 | 16,2 | 4 | 14 | 18 |

Tableau 4.

| Ex. | D1 | M | IR1 | B | D2a | | ABS | D2b | | M | IR2 | B | D3 | | P |
|---|---|---|---|---|---|---|---|---|---|---|---|---|---|---|---|
| | ZSO5 | ZnO | Ag | AZO | ZSO5 | SiN | NiCrW | SiN | ZSO5 | ZnO | Ag | AZO | ZSO5 | SiN | TZO |
| 13 | 38 | 4 | 14,1 | 5,5 | 24,1 | 20 | 1,1 | 25 | 11,5 | 4 | 15,5 | 5,5 | 9,8 | 21 | 3 |
| 14 | 38 | 4 | 14,1 | 5,5 | 29,6 | 20 | 1,1 | 25 | 6 | 4 | 15,5 | 5,5 | 9,8 | 21 | 3 |
| 15 | 38 | 4 | 14,1 | 5,5 | 32,6 | 20 | 1,1 | 25 | 3 | 4 | 15,5 | 5,5 | 9,8 | 21 | 3 |
| C1 | 38 | 4 | 14,1 | 5,5 | 35,6 | 20 | 1,1 | 25 | 0,0 | 4 | 15,5 | 5,5 | 9,8 | 21 | 3 |
| 16 | 45 | 4 | 17,2 | 5,5 | 24 | 20 | 1,71 | 25 | 11,4 | 4 | 17,1 | 5,5 | 9,9 | 24 | 0 |
| 17 | 38 | 4 | 16,3 | 5,5 | 24,4 | 10 | 1,8 | 35 | 11,7 | 4 | 16,3 | 5,5 | 9,9 | 24 | 0 |
| 18 | 45 | 4 | 17,2 | 5,5 | 23,1 | 10 | 1,69 | 35 | 10,5 | 4 | 16,7 | 5,5 | 8,6 | 24 | 0 |
| | ZSO5 | ZnO | Ag | AZO | ZSO5 | SiN | NiCrW | SiN | TZO65 | ZnO | Ag | AZO | ZSO5 | SiN | TZO65 |
| 19 | 38 | 4,0 | 14,1 | 5,5 | 24,1 | 20 | 1,1 | 25 | 10 | 4 | 15,5 | 5,5 | 9,8 | 21 | 3 |
| | ZSO5 | ZnO | Ag | AZO | ZSO5 | SiN | NiCrW | SiN | ZSO5 9,2 / TZO65 3 | ZnO | Ag | AZO | ZSO5 | SiN | TZO |
| 20 | 42 | 4 | 14,1 | 5,5 | 24,8 | 20 | 1,1 | 25 | 9,2 | 4 | 15,5 | 5,5 | 8,3 | 21 | 3 |
| | ZSO5 | ZnO | Ag | AZO | ZSO5 | SiN | CrZr | SiN | ZSO5 | ZnO | Ag | AZO | ZSO5 | SiN | |
| 21 | 39 | 4 | 14,1 | 5,5 | 23, | 20 | 0,75 | 25 | 11,5 | 4 | 15,5 | 5,5 | 10,2 | 24 | 0 |
| 22 | 39 | 4 | 14,1 | 5,5 | 22,8 | 20 | 0,9 | 25 | 10,5 | 4 | 15,5 | 5,5 | 10,2 | 24 | 0 |
| 23 | 39 | 4 | 14,1 | 5,5 | 22,4 | 35 | 0,9 | 10 | 10,5 | 4 | 15,6 | 5,5 | 10,4 | 24 | 0 |
| 24 | 39 | 4 | 16,6 | 5,5 | 22,7 | 20 | 1,3 | 25 | 10,7 | 4 | 16,5 | 5,5 | 10,3 | 24 | 0 |
| 25 | 38 | 4 | 10,5 | 5,5 | 20,4 | 20 | 0,6 | 25 | 8,7 | 4 | 16 | 5,5 | 9,5 | 24 | 0 |

Tableau 5.

| Ex. | D1 | M | IR1 | B | D2a | | ABS | D2b | | M | IR2 | B | D3 | |
|---|---|---|---|---|---|---|---|---|---|---|---|---|---|---|
| | ZSO5 | ZnO | Ag | AZO | ZSO5 | SiN | ZrN | SiN | ZSO5 | ZnO | Ag | AZO | ZSO5 | SiN |
| 26 | 36 | 4 | 16 | 5 | 14 | 20 | 11 | 20 | 15 | 4 | 15 | 5 | 13 | 24 |
| 27 | 36 | 4 | 16,9 | 7 | 10 | 20 | 18 | 20 | 10 | 4 | 14,5 | 7 | 11 | 24 |
| 28 | 36 | 4 | 16,9 | 6 | 13 | 20 | 15 | 20 | 13 | 4 | 14,8 | 6 | 8 | 24 |
| 29 | 36 | 4 | 16,7 | 5 | 10,5 | 10 | 14 | 30 | 10,5 | 4 | 14,7 | 5 | 9,3 | 24 |
| 30 | 36 | 4 | 15,2 | 5 | 13,3 | 20 | 8 | 20 | 13,3 | 4 | 14,1 | 5 | 9,9 | 24 |
| 31 | 37 | 4 | 13,1 | 5 | 15,8 | 20 | 4 | 20 | 15,8 | 4 | 13,9 | 5 | 10,3 | 24 |
| | ZSO5 | ZnO | Ag | AZO | ZSO5 | SiN | TiN | SiN | ZSO5 | ZnO | Ag | AZO | ZSO5 | SiN |
| 32 | 36 | 4 | 16 | 5 | 20 | 20 | 8 | 20 | 19 | 4 | 16 | 5 | 13 | 24 |
| 33 | 36 | 4 | 16,2 | 6 | 16 | 20 | 9,5 | 20 | 17 | 4 | 14 | 6 | 10 | 24 |
| 34 | 36 | 4 | 16,5 | 7 | 16 | 20 | 9 | 20 | 16 | 4 | 15,2 | 7 | 8,5 | 24 |
| 35 | 34 | 4 | 16,2 | 6 | 16,9 | 30 | 9 | 10 | 16,9 | 4 | 15,1 | 6 | 8,5 | 24 |
| 36 | 34 | 4 | 14,8 | 6 | 17,5 | 20 | 6,5 | 20 | 17,5 | 4 | 14,4 | 6 | 9,2 | 24 |
| 37 | 34 | 4 | 11,7 | 6 | 16,8 | 20 | 4,5 | 20 | 16,8 | 4 | 15,1 | 6 | 10 | 24 |
| | ZSO5 | ZnO | Ag | AZO | ZSO5 | SiN | TiZrN | SiN | ZSO5 | ZnO | Ag | AZO | ZSO5 | SiN |
| 38 | 34 | 4 | 16,2 | 6 | 16,9 | 20 | 12 | 20 | 16,9 | 4 | 15,1 | 6 | 8,5 | 24 |
| 39 | 34 | 4 | 16,2 | 6 | 16,9 | 20 | 7 | 20 | 16,9 | 4 | 15,1 | 6 | 9,5 | 24 |
| 40 | 34 | 4 | 16,2 | 6 | 16,9 | 20 | 5 | 20 | 16,9 | 4 | 15,1 | 6 | 9,5 | 24 |
| 41 | 34 | 4 | 16,2 | 6 | 16,9 | 20 | 7 | 30 | 6,9 | 4 | 15,1 | 6 | 9,5 | 24 |
| C2 | 34 | 4 | 16,2 | 6 | 16,9 | 20 | 7 | 36,9 | 0 | 4 | 15,1 | 6 | 9,5 | 24 |
| 42 | 34 | 4 | 16,2 | 6 | 26,9 | 20 | 7 | 10 | 16,9 | 4 | 15,1 | 6 | 9,5 | 24 |
| 43 | 34 | 4 | 16,2 | 6 | 26,9 | 20 | 7 | 20 | 6,9 | 4 | 15,1 | 6 | 9,5 | 24 |
| | ZSO5 | ZnO | Ag | AZO | ZSO5 | SiN | NiVN | SiN | ZSO5 | ZnO | Ag | AZO | ZSO5 | SiN |
| 44 | 38 | 4 | 14,1 | 5,5 | 24,1 | 20 | 1,5 | 25 | 11,5 | 4 | 15,5 | 5,5 | 9,8 | 24 |
| | ZSO5 | ZnO | Ag | AZO | ZSO5 | SiN | NiCrWN | SiN | ZSO5 | ZnO | Ag | AZO | ZSO5 | SiN |
| 45 | 38 | 4 | 14,1 | 5,5 | 24,1 | 20 | 1,3 | 25 | 11,5 | 4 | 15,5 | 5,5 | 9,8 | 24 |
| 46 | 38 | 4 | 14,1 | 5,5 | 24,1 | 20 | 1,5 | 25 | 11,5 | 4 | 15,5 | 5,5 | 9,8 | 24 |
| | ZSO5 | ZnO | Ag | AZO | ZSO5 | SiN | TiAlN | SiN | ZSO5 | ZnO | Ag | AZO | ZSO5 | SiN |
| 47 | 38 | 4 | 14,1 | 5,5 | 24,1 | 20 | 15 | 25 | 11,5 | 4 | 15,5 | 5,5 | 9,8 | 24 |
| 48 | 38 | 4 | 14,1 | 5,5 | 24,1 | 20 | 11 | 25 | 11,5 | 4 | 15,5 | 5,5 | 9,8 | 24 |
| | ZSO5 | ZnO | Ag | AZO | ZSO5 | SiN | SiZrN | SiN | ZSO5 | ZnO | Ag | AZO | ZSO5 | SiN |
| 49 | 38 | 4 | 14,1 | 5,5 | 24,1 | 20 | 25 | 25 | 11,5 | 4 | 15,5 | 5,5 | 9,8 | 24 |
| 50 | 38 | 4 | 14,1 | 5,5 | 24,1 | 20 | 20 | 25 | 11,5 | 4 | 15,5 | 5,5 | 9,8 | 24 |
| | ZSO5 | ZnO | Ag | AZO | ZSO5 | SiN | SiNiCrN | SiN | ZSO5 | ZnO | Ag | AZO | ZSO5 | SiN |
| 51 | 38 | 4 | 14,1 | 5,5 | 24,1 | 20 | 24 | 25 | 11,5 | 4 | 15,5 | 5,5 | 9,8 | 24 |
| 52 | 38 | 4 | 14,1 | 5,5 | 24,1 | 20 | 18 | 25 | 11,5 | 4 | 15,5 | 5,5 | 9,8 | 24 |

Tableau 6

| Ex. | D1 | M | IR1 | B | D2a | | ABS | D2b | | M | IR2 | B | D3 | | | M | IR3 | B | D4 | |
|---|---|---|---|---|---|---|---|---|---|---|---|---|---|---|---|---|---|---|---|---|
| | ZSO5 | ZnO | Ag | AZO | ZSO5 | SiN | NiCrW | SiN | ZSO5 | ZnO | Ag | AZO | ZSO5 | SiN | ZSO5 | ZnO | Ag | AZO | ZSO5 | SiN |
| 53 | 17,7 | 5 | 9,2 | 4 | 19 | 20 | 0,8 | 15 | 10 | 5 | 15,1 | 4 | 20 | 20 | 25,8 | 5 | 15,5 | 4 | 14 | 18,9 |

Tableau 7

| Ex. | $\Delta_{TL}$ | $\Delta_{RC}$ | $\Delta_{Rg}$ | $\Delta E^*_{TL}$ | $\Delta F^*_{Rc}$ | $\Delta E^*_{Rg}$ | TL | | | | Rg | | | | Rc | | | |
|---|---|---|---|---|---|---|---|---|---|---|---|---|---|---|---|---|---|---|
| | | | | | | | Y | L* | a* | b* | Y | L* | a* | b* | Y | L* | a* | b* |
| 1 | -1,7 | 0,3 | 0,9 | 2,9 | 2 | 6,1 | 65,5 | 84,8 | -2,4 | -0,1 | 8,7 | 35,3 | -2,5 | -1,8 | 6,6 | 31,2 | -7 | -6,5 |
| 2 | -5,7 | -0,9 | 1,7 | 5,7 | 3,9 | 8,4 | 51,8 | 77,2 | -3,7 | -0,9 | 11,4 | 40,2 | -2,3 | 1,1 | 9 | 36,4 | -5,4 | -12 |
| 3 | -2,7 | -0,5 | 0,9 | 3,1 | 3,5 | 5,1 | 43,4 | 71,9 | -3,5 | -2,8 | 9,6 | 37,1 | -0,7 | 0,2 | 11,6 | 40,7 | 0,4 | -2,5 |
| 4 | -5,7 | -0,9 | 1,7 | 5,7 | 3,9 | 8,4 | 51,8 | 77,2 | -3,7 | -0,9 | 11,4 | 40,2 | -2,3 | 1,1 | 9 | 36,4 | -5,4 | -12 |
| 5 | 2,2 | 0,5 | 0,5 | 2,1 | 2,4 | 2,5 | 63,2 | 83,5 | -4,3 | 4,3 | 7,9 | 33,6 | -2,4 | 2,0 | 7,9 | 33,6 | -5,7 | -10,2 |
| 6 | 2,2 | 0,5 | 1,3 | 2,4 | 2,4 | 4,1 | 55,9 | 79,5 | -4,8 | 4,8 | 9,5 | 36,6 | -1,0 | 8,9 | 9,5 | 42,2 | -5,9 | -8,7 |
| 7 | 2,5 | -0,2 | 1,1 | 1,7 | 0,8 | 5,4 | 50,0 | 76,1 | -7,6 | 2,6 | 7,7 | 33,1 | 2,6 | 9,7 | 7,7 | 41,2 | 0,4 | -4,5 |
| 8 | 1,5 | 0,7 | 1,0 | 2,0 | 1,9 | 2,9 | 57,1 | 80,1 | -8,4 | 7,4 | 9,9 | 37,7 | -2,3 | -0,4 | 9,9 | 38,9 | 4,2 | -20,5 |
| 9 | 5,2 | -0,8 | 0,4 | 2,8 | 3,4 | 1,4 | 65,1 | 84,4 | -5,7 | 7,8 | 5,7 | 28,5 | -0,1 | -0,3 | 8,2 | 35,0 | -0,9 | -18,5 |
| 10 | 6,6 | -1,1 | 0,7 | 3,8 | 4,2 | 2,4 | 60,3 | 82,0 | -8,2 | 4,0 | 5,2 | 27,5 | 2,3 | -2,7 | 8,8 | 35,9 | 4,9 | -12,0 |
| 11 | | | | 3 | 4 | 8 | 36,5 | 80 | -6 | -0,8 | 6,7 | 31,1 | -3,9 | -0,9 | 2,9 | 19,6 | 12,8 | -9 |
| 12 | | | | 3 | 4 | 8 | 36,5 | 80 | -6 | -0,8 | 6,7 | 31,1 | -3,9 | -0,9 | 2,9 | 19,6 | 12,8 | -9 |
| 13 | 1,5 | 1,9 | 0,5 | 1,1 | 5,6 | 1,0 | 59,3 | 81,5 | -4,9 | 2,2 | 11,5 | 40,4 | 0,2 | -2,4 | 6,6 | 31,3 | 2,9 | -17,1 |
| 14 | 2,6 | 1,7 | 0,1 | 1,7 | 4,6 | 1,1 | 60,9 | 82,4 | -4,7 | 2,2 | 10,6 | 38,9 | 0,4 | -3,6 | 6,9 | 32,1 | 2,1 | -17,9 |
| 15 | 2,8 | 1,4 | -0,4 | 1,6 | 4,5 | 1,3 | 61,5 | 82,6 | -5,1 | 3,0 | 9,7 | 37,4 | 1,8 | -3,8 | 6,6 | 31,5 | 3,4 | -19,9 |
| C1 | 2,7 | 1,6 | -1,1 | 1,8 | 6,1 | 2,7 | 61,8 | 82,8 | -5,5 | 5,8 | 8,8 | 35,7 | 3,8 | -8,0 | 6,9 | 32,3 | 6,0 | -23,0 |
| 16 | 1,7 | 2,0 | -0,7 | 2,8 | 6,7 | 2,8 | 45,0 | 72,9 | -6,7 | 0,4 | 17,3 | 48,8 | 0,5 | -2,0 | 7,4 | 33,3 | 10,8 | -19,4 |
| 17 | 1,6 | 1,7 | -0,4 | 2,0 | 4,5 | 2,2 | 44,8 | 72,9 | -5,8 | -0,6 | 18,0 | 49,4 | -1,4 | 2,9 | 7,9 | 34,4 | 4,3 | -18,1 |
| 18 | 0,9 | 1,8 | -0,8 | 1,6 | 5,9 | 3,1 | 44,2 | 72,5 | -6,4 | -0,9 | 17,9 | 49,4 | 0,0 | -0,4 | 7,4 | 33,0 | 8,1 | -12,5 |
| 19 | -0,7 | 2,0 | -0,1 | 2,0 | 2,2 | 5,2 | 56,6 | 80,0 | -5,3 | 0,4 | 12,0 | 41,2 | 1,3 | -1,7 | 6,9 | 31,9 | 0,8 | -15,0 |
| 20 | 2,8 | 1,6 | -0,8 | 1,6 | 4,7 | 2,0 | 59,7 | 81,7 | -4,4 | 2,8 | 10,6 | 39,0 | -4,0 | -3,9 | 6,9 | 31,8 | 1,6 | -11,5 |
| 21 | 1,2 | 1,8 | 0,3 | 1,5 | 4,4 | 2,5 | 60,3 | 81,9 | -4,1 | 4,8 | 11,9 | 41,2 | -2,6 | -8,0 | 6,9 | 32,0 | -2,2 | -16,2 |
| 22 | 1,2 | 1,9 | 0,3 | 2,2 | 5,1 | 2,0 | 55,9 | 79,6 | -4,5 | 3,6 | 12,3 | 41,8 | -2,2 | -4,8 | 5,9 | 29,6 | 0,6 | -16,4 |

(suite)

| Ex. | $\Delta_{TL}$ | $\Delta_{Rc}$ | $\Delta_{Rg}$ | $\Delta E^*_{TL}$ | $\Delta E^*_{Rc}$ | $\Delta E^*_{Rg}$ | TL | | | | Rg | | | | Rc | | | |
|---|---|---|---|---|---|---|---|---|---|---|---|---|---|---|---|---|---|---|
| | | | | | | | Y | L* | a* | b* | Y | L* | a* | b* | Y | L* | a* | b* |
| 23 | 2,7 | 1,2 | -1,5 | 1,7 | 4,3 | 3,1 | 55,9 | 79,5 | -4,7 | 4,5 | 11,5 | 40,4 | -1,6 | -4,7 | 5,5 | 28,6 | 2,2 | -16,4 |
| 24 | 1,0 | 2,1 | -0,4 | 2,1 | 5,4 | 1,4 | 39,3 | 69,0 | -5,8 | 1,8 | 20,7 | 52,6 | -1,3 | 1,1 | 7,6 | 33,7 | 5,4 | -18,9 |
| 25 | 2,3 | 1,9 | 0,8 | 1,3 | 5,0 | 3,2 | 67,8 | 85,9 | -4,6 | 3,4 | 5,4 | 28,0 | 0,6 | -7,5 | 5,7 | 28,4 | 8,5 | -1,2 |
| 26 | 7,7 | 4,1 | -0,8 | 5,4 | 12,1 | 5,3 | 53,0 | 77,7 | -7,5 | 11,9 | 17,8 | 49,6 | 2,6 | -12,3 | 6,1 | 30,9 | 3,6 | -34,0 |
| 27 | 10,7 | 3,8 | -2,5 | 9,1 | 16,1 | 8,1 | 41,7 | 70,5 | -8,9 | 10,0 | 22,4 | 54,4 | 4,3 | -2,9 | 4,3 | 26,0 | 11,0 | -37,4 |
| 28 | 7,2 | 4,6 | -0,7 | 6,3 | 10,9 | 6,6 | 46,6 | 73,8 | -6,2 | 7,3 | 22,7 | 55,0 | -2,8 | -5,8 | 7,9 | 34,6 | -8,7 | -21,4 |
| 29 | 8,2 | 3,5 | -1,2 | 6,7 | 12,3 | 7,9 | 48,1 | 74,8 | -7,2 | 6,5 | 20,2 | 52,2 | -0,6 | -3,4 | 4,9 | 27,4 | -1,6 | -22,8 |
| 30 | 5,6 | 2,9 | -0,7 | 3,7 | 7,6 | 4,8 | 60,4 | 81,9 | -5,5 | 6,9 | 14,8 | 45,5 | -1,4 | -5,1 | 5,8 | 29,3 | -7,5 | -15,7 |
| 31 | 3,0 | 0,8 | -0,3 | 1,6 | 2,2 | 1,3 | 74,8 | 89,2 | -3,4 | 7,5 | 9,0 | 36,1 | -2,2 | -9,2 | 6,8 | 31,6 | -7,3 | -7,7 |
| 32 | 1,4 | -0,2 | -6,8 | 4,0 | 3,8 | 12,1 | 49,4 | 75,5 | -7,4 | 10,5 | 16,7 | 48,1 | 3,0 | -11,2 | 6,1 | 31,0 | 5,1 | -34,2 |
| 33 | 1,6 | 0,5 | -5,3 | 1,3 | 2,3 | 7,8 | 45,0 | 72,9 | -7,6 | 5,2 | 20,1 | 51,7 | 3,3 | 2,8 | 3,2 | 21,8 | 8,4 | -28,2 |
| 34 | 4,4 | 0,2 | -3,5 | 3,2 | 4,3 | 5,1 | 45,4 | 73,1 | -7,7 | 6,0 | 19,1 | 50,7 | 2,8 | -1,9 | 4,5 | 26,1 | 6,2 | -26,8 |
| 35 | 4,1 | 0,2 | -1,5 | 2,7 | 4,5 | 2,6 | 46,3 | 73,8 | -7,1 | 3,4 | 19,7 | 51,5 | 0,2 | -0,6 | 5,0 | 27,5 | 1,3 | -22,8 |
| 36 | 3,4 | 0,6 | -0,6 | 2,0 | 1,8 | 2,7 | 57,4 | 80,4 | -5,6 | 4,7 | 14,3 | 44,7 | -0,3 | -3,1 | 5,1 | 27,6 | -3,6 | -18,0 |
| 37 | 2,8 | 0,6 | 0,1 | 1,8 | 2,1 | 2,4 | 68,5 | 86,2 | -4,9 | 5,6 | 7,0 | 32,1 | 0,4 | -10,0 | 4,6 | 25,8 | 3,2 | -13,9 |
| 38 | 5,1 | 1,4 | -1,4 | 3,8 | 5,7 | 2,6 | 40,6 | 69,8 | -5,2 | 6,2 | 24,2 | 56,4 | -3,8 | -0,8 | 8,9 | 36,3 | -3,7 | -17,8 |
| 39 | 5,8 | 0,5 | -3,1 | 3,7 | 2,0 | 4,5 | 49,4 | 75,6 | -5,0 | 8,1 | 18,9 | 50,6 | -2,6 | -2,5 | 6,7 | 31,7 | -4,9 | -19,7 |
| 40 | -1,8 | 1,4 | 1,0 | 3,4 | 3,5 | 6,2 | 57,8 | 80,5 | -4,4 | 8,0 | 15,7 | 46,6 | -2,2 | -4,4 | 6,5 | 31,1 | -7,1 | -16,9 |
| 41 | 5,3 | 1,0 | -1,6 | 3,4 | 2,7 | 3,1 | 49,3 | 75,5 | -5,0 | 7,4 | 19,4 | 51,2 | -2,7 | -2,9 | 6,7 | 31,8 | -4,5 | -21,6 |
| C2 | -1,2 | 5,3 | 1,4 | 1,8 | 11,7 | 3,7 | 49,3 | 75,5 | -5,2 | 7,7 | 19,2 | 50,9 | -2,3 | -2,6 | 6,6 | 31,5 | -4,3 | -21,7 |
| 42 | 4,8 | 1,0 | -1,5 | 3,0 | 2,2 | 2,2 | 49,9 | 75,9 | -5,1 | 6,1 | 19,0 | 50,6 | -2,2 | 0,0 | 8,5 | 35,7 | -7,4 | -21,5 |
| 43 | 6,4 | 0,1 | -3,9 | 4,2 | 0,9 | 5,8 | 50,0 | 76,0 | -5,1 | 6,8 | 17,9 | 49,3 | -2,1 | 0,9 | 8,1 | 35,0 | -6,7 | -21,2 |
| 44 | 4,8 | 1,8 | -1,8 | 3,5 | 4,5 | 5,0 | 48,3 | 75,2 | -6,7 | -2,3 | 12,7 | 42,2 | 2,1 | 5,3 | 7,5 | 33,1 | 10,1 | -8,5 |
| 45 | 3,8 | 2,1 | -0,7 | 2,2 | 6,3 | 4,3 | 60,9 | 82,3 | -4,1 | 3,2 | 10,2 | 38,3 | -5,2 | -3,3 | 7,2 | 32,7 | -1,6 | -10,7 |

(suite)

| Ex. | $\Delta_{TL}$ | $\Delta_{Rc}$ | $\Delta_{Rg}$ | $\Delta E^*_{TL}$ | $\Delta E^*_{Rc}$ | $\Delta E^*_{Rg}$ | TL | | | | Rg | | | | Rc | | | |
|---|---|---|---|---|---|---|---|---|---|---|---|---|---|---|---|---|---|---|
| | | | | | | | Y | L* | a* | b* | Y | L* | a* | b* | Y | L* | a* | b* |
| 46 | 4,0 | 1,9 | -1,1 | 2,4 | 5,4 | 3,7 | 56,8 | 80,1 | -4,5 | 2,3 | 11,1 | 39,7 | -5,0 | -0,1 | 7,4 | 33,0 | -0,3 | -8,6 |
| 47 | -4,1 | 1,9 | -2,1 | 3,0 | 6,5 | 2,9 | 38,4 | 68,2 | -5,6 | 9,3 | 22,7 | 54,9 | -6,8 | -2,1 | 22,4 | 54,4 | 2,2 | -1,5 |
| 48 | -0,1 | 3,0 | -0,4 | 1,7 | 5,3 | 4,5 | 50,6 | 76,2 | -2,6 | 9,9 | 19,5 | 51,4 | -9,3 | -1,6 | 19,4 | 51,2 | -5,0 | -4,3 |
| 49 | 3,0 | 1,5 | -0,1 | 2,9 | 2,9 | 3,4 | 47,1 | 74,4 | -5,1 | -0,1 | 40,4 | 69,4 | 1,1 | 13,7 | 41,4 | 70,0 | 4,0 | 14,3 |
| 50 | 2,1 | 2,2 | 0,5 | 4,1 | 4,0 | 3,3 | 55,2 | 79,2 | -1,5 | 3,7 | 34,1 | 64,9 | -2,8 | 3,2 | 35,5 | 65,9 | -1,7 | 6,4 |
| 51 | 1,4 | -0,1 | -0,5 | 1,5 | 1,4 | 1,9 | 43,5 | 72,2 | -8,5 | -6,9 | 34,4 | 64,5 | 7,0 | 28,3 | 32,6 | 62,9 | 12,6 | 31,8 |
| 52 | 1,6 | -1,8 | -3,2 | 1,9 | 3,3 | 3,2 | 45,8 | 73,6 | -5,9 | -2,1 | 32,6 | 63,4 | 3,4 | 15,4 | 32,3 | 62,9 | 8,7 | 21,1 |
| 53 | | | | 1,5 | 7,1 | 3,5 | 57 | 80,3 | -5,9 | -1,5 | 5,1 | 27,1 | 1,6 | -5,8 | 4,1 | 24,8 | 5,4 | -13,5 |

Tableau 8 :

| Ex. | TL | | | | Rg (externe) | | | | Rc (interne) | | | | Vitrage double (6/15/4) | | | |
|---|---|---|---|---|---|---|---|---|---|---|---|---|---|---|---|---|
| | Y | L* | a* | b* | Y | L* | a* | b* | Y | L* | a* | b* | TE EN410 | AE | g EN410 | S |
| 11 | 51,4 | 77 | -5,6 | -0,9 | 8,1 | 34,4 | -0,7 | -7,0 | 10,2 | 38,2 | 0,7 | -0,8 | 23 | 48 | 26,5 | 1,94 |
| 13 | 50,8 | 76,6 | -6,0 | 3,0 | 14,0 | 44,3 | -2,2 | -4,0 | 12,3 | 41,9 | 0,6 | -10,4 | 25,8 | 40,7 | 28,6 | 1,78 |
| 16 | 39,3 | 69,1 | -7,3 | 1,4 | 18,9 | 50,7 | -1,5 | -4,2 | 13,8 | 44,3 | 3,6 | -12,7 | 19,1 | 42,7 | 21,6 | 1,82 |
| 17 | 38,2 | 68,3 | -7,1 | 0,5 | 20,1 | 51,9 | -1,2 | 0,8 | 13,2 | 43,4 | 2,5 | -13,1 | 18,9 | 43,8 | 21,5 | 1,78 |
| 25 | 60,4 | 82,0 | -5,6 | 3,0 | 9,2 | 36,4 | -1,9 | -4,8 | 12,8 | 42,5 | 3,7 | -1,0 | 31,4 | 38,9 | 34,4 | 1,76 |
| 23 | 49,8 | 76,0 | -5,5 | 3,1 | 14,8 | 45,5 | -3,3 | -3,9 | 12,9 | 42,9 | -0,5 | -9,8 | 25,6 | 40,7 | 28,4 | 1,76 |
| 24 | 35,2 | 66,0 | -6,6 | 1,4 | 21,9 | 53,9 | -2,1 | 0,7 | 14,3 | 45,0 | 2,3 | -12,6 | 17,6 | 45,1 | 20,3 | 1,74 |
| 53 | 51,6 | 77,2 | -6,3 | -1,3 | 7,7 | 33,5 | -0,8 | -5,1 | 11,4 | 40,5 | 1,7 | -6,7 | 0,2 | 40 | 27,1 | 1,9 |

## Revendications

1. Vitrage transparent de contrôle solaire comportant sur au moins l'une des faces d'un substrat verrier un empilage multicouches transparent comprenant une alternance de n couches fonctionnelles réfléchissant le rayonnement infrarouge à base d'argent et de n+1 revêtements diélectriques, avec n>1, de manière à ce que chaque couche fonctionnelle soit entourée de revêtements diélectriques, **caractérisé en ce qu'**un desdits revêtements diélectriques

   a) comprend au moins une couche absorbant le rayonnement solaire enfermée entre deux couches diélectriques formées d'un matériau choisi parmi les nitrures de silicium ou d'aluminium, ou leurs mélanges, **caractérisé en ce qu'**au moins une couche fonctionnelle est disposée au-dessus de la dite couche absorbant le rayonnement solaire,
   b) comprend (i) une couche d'oxyde transparent intercalaire choisi parmi l'oxyde mixte de zinc et d'étain comprenant entre 40 et 60% d'étain, ou l'oxyde mixte de titane et de zirconium et (ii) une couche de mouillage à base d'oxyde de zinc, la couche d'oxyde transparent intercalaire étant de composition différente de la couche de mouillage, disposées entre cette dite couche absorbant le rayonnement solaire et cette dite couche fonctionnelle, la couche de mouillage étant à proximité immédiate de cette dite couche fonctionnelle,

   et **caractérisé en ce que** l'épaisseur géométrique de la couche d'oxyde transparent intercalaire est comprise entre 3 et 25 nm,
   et **caractérisé en ce que** l'absorption énergétique AE (selon la norme EN410) du substrat verrier revêtu de l'empilage multicouches est inférieure à 50%, de préférence inférieure à 45%, et avantageusement inférieure à 40%.

2. Vitrage transparent selon la revendication 1, **caractérisé en ce que** la couche d'oxyde transparent intercalaire a une épaisseur géométrique comprise entre 3 et 12 nm.

3. Vitrage transparent selon l'une quelconque des revendications 1 ou 2, **caractérisé en ce que** les couches diélectriques enfermant la couche absorbant le rayonnement solaire sont à base de nitrure de silicium.

4. Vitrage transparent selon l'une quelconque des revendications 1 à 3, **caractérisé en ce que** la couche absorbant le rayonnement solaire est essentiellement sous forme métallique.

5. Vitrage transparent selon la revendication 4, **caractérisé en ce que** la couche absorbant le rayonnement solaire est un métal choisi parmi les alliages NiCr, NiCrW, WTa, WCr, NbZr, TaNiV, NbCr, NiV et CrZr, de préférence NiCrW et CrZr.

6. Vitrage transparent selon l'une quelconque des revendications 1 à 3, **caractérisé en ce que** la couche absorbant le rayonnement solaire est un nitrure ou un sous-nitrure.

**7.** Vitrage transparent selon la revendication 6, **caractérisé en ce que** la couche absorbant le rayonnement solaire est un nitrure choisi parmi TiN, NiCrWN, NiVN, TaN, CrN, ZrN, CrZrN, TiAlN, TiZrN, WN, SiZrN et SiNiCrN, de préférence choisi parmi TiN et NiCrWN

**8.** Vitrage transparent selon l'une quelconque des revendications 1 à 7, **caractérisé en ce que** l'empilage comprend au moins deux couches fonctionnelles réfléchissant le rayonnement infrarouge à base d'argent.

**9.** Vitrage transparent selon la revendication 8, **caractérisé en ce que** la couche absorbant le rayonnement solaire est disposée entre les deux couches fonctionnelles réfléchissant le rayonnement infrarouge à base d'argent.

**10.** Vitrage transparent selon l'une quelconque des revendications 1 à 10, **caractérisé en ce que** la première couche diélectrique, du premier revêtement diélectrique, déposée sur le substrat verrier, et en contact avec lui, est une couche d'oxyde mixte zinc-étain, de préférence contenant au moins 20% d'étain.

**11.** Vitrage transparent selon l'une quelconque des revendications 1 à 11, **caractérisé en ce que** la ou les couches de protection déposées directement sur la ou les couches fonctionnelles à base d'argent sont en ZnO, éventuellement dopé à l'aluminium, obtenu à partir d'une cible céramique.

**12.** Vitrage transparent selon l'une quelconque des revendications précédentes, **caractérisé en ce que** la transmission lumineuse totale TL est comprise entre 25% et 72%, de préférence entre 35% et 68%.

**13.** Vitrage feuilleté **caractérisé en ce qu'**il comprend un vitrage selon l'une quelconque des revendications précédentes.

**14.** Vitrage multiple isolant **caractérisé en ce qu'**il comprend un vitrage selon l'une quelconque des revendications précédentes.

**15.** Vitrage multiple isolant selon la revendication 15, **caractérisé en ce que** le facteur solaire g, mesuré selon la norme EN410, est compris entre 12% et 40%, de préférence entre 20% et 36%, pour un vitrage double 6/15/4 en verre clair.

**16.** Vitrage multiple isolant selon la revendication 16, **caractérisé en ce que** la sélectivité, exprimée sous forme de la transmission lumineuse TL par rapport au facteur solaire g, est d'au moins 1,4, de préférence d'au moins 1,5, avantageusement d'au moins 1,6.


**Patentansprüche**

**1.** Transparente Sonnenschutzverglasung, umfassend auf mindestens einer der Seiten eines Glassubstrats einen mehrschichtigen transparenten Stapel, umfassend eine Wechselfolge von n IR-reflektierenden Funktionsschichten auf Basis von Silber und n+1 dielektrischen Verkleidungen, wobei n>1, so dass jede Funktionsschicht von dielektrischen Verkleidungen umgeben ist, **dadurch gekennzeichnet, dass** eine der dielektrischen Verkleidungen

a) mindestens eine die Sonnenstrahlung absorbierende Schicht umfasst, die zwischen zwei dielektrischen Schichten eingeschlossen ist, die aus einem Material gebildet sind, das unter den Silizium- oder Aluminiumnitriden oder ihren Gemischen ausgewählt ist, **dadurch gekennzeichnet, dass** mindestens eine Funktionsschicht über der die Sonnenstrahlung absorbierenden Schicht angeordnet ist,
b) eine transparente Oxidzwischenschicht (i), die ausgewählt ist unter dem Mischoxid von Zink und Zinn, umfassend zwischen 40 und 60 % Zinn, oder dem Mischoxid von Titan und Zirkonium, und eine Benetzungsschicht (ii) auf Basis von Zinkoxid, wobei die transparente Oxidzwischenschicht eine andere Zusammensetzung als die Benetzungsschicht hat, umfasst, die zwischen dieser die Sonnenstrahlung absorbierenden Schicht und dieser Funktionsschicht angeordnet sind, wobei die Benetzungsschicht in unmittelbarer Nähe zu dieser Funktionsschicht angeordnet ist,

und **dadurch gekennzeichnet, dass** die geometrische Dicke der transparenten Oxidwwischenschicht zwischen 3 und 25 nm liegt,
und **dadurch gekennzeichnet, dass** die Energieabsorption AE (nach der Norm EN410) des verkleideten Glassubstrats des mehrschichtigen Stapels geringer als 50 %, vorzugsweise geringer als 45 % und vorteilhafterweise geringer als 40 % ist.

2. Transparente Verglasung nach Anspruch 1, **dadurch gekennzeichnet, dass** die transparente Oxidzwischenschicht eine geometrische Dicke zwischen 3 und 12 nm hat.

3. Transparente Verglasung nach einem der Ansprüche 1 oder 2, **dadurch gekennzeichnet, dass** die dielektrischen Schichten, die die die Sonnenstrahlung absorbierende Schicht einschließen, auf Basis von Siliziumnitrid sind.

4. Transparente Verglasung nach einem der Ansprüche 1 bis 3, **dadurch gekennzeichnet, dass** die die Sonnenstrahlung absorbierende Schicht im Wesentlichen in metallischer Form vorhanden ist.

5. Transparente Verglasung nach Anspruch 4, **dadurch gekennzeichnet, dass** die die Sonnenstrahlung absorbierende Schicht ein Metall ist, das ausgewählt ist unter den Legierungen NiCr, NiCrW, WTa, WCr, NbZr, TaNiV, NbCr, NiV und CrZr, vorzugsweise NiCrW und CrZr.

6. Transparente Verglasung nach einem der Ansprüche 1 bis 3, **dadurch gekennzeichnet, dass** die die Sonnenstrahlung absorbierende Schicht ein Nitrid oder ein Sub-Nitrid ist.

7. Transparente Verglasung nach Anspruch 6, **dadurch gekennzeichnet, dass** die die Sonnenstrahlung absorbierende Schicht ein Nitrid ist, das ausgewählt ist unter TiN, NiCrWN, NiVN, TaN, CrN, ZrN, CrZrN, TiAlN, TiZrN, WN, SiZrN und SiNiCrN, vorzugsweise ausgewählt unter TiN und NiCrWN.

8. Transparente Verglasung nach einem der Ansprüche 1 bis 7, **dadurch gekennzeichnet, dass** der Stapel mindestens zwei IR-reflektierende Funktionsschichten auf Basis von Silber umfasst.

9. Transparente Verglasung nach Anspruch 8, **dadurch gekennzeichnet, dass** die die Sonnenstrahlung absorbierende Schicht zwischen den zwei IR-reflektierenden Schichten auf Basis von Silber angeordnet ist.

10. Transparente Verglasung nach einem der Ansprüche 1 bis 10, **dadurch gekennzeichnet, dass** die erste dielektrische Schicht der ersten dielektrischen Verkleidung, die auf dem Glassubstrat angeordnet und mit diesem in Kontakt ist, eine Mischoxidschicht Zink-Zinn ist, die vorzugsweise mindestens 20 % Zinn enthält.

11. Transparente Verglasung nach einem der Ansprüche 1 bis 11, **dadurch gekennzeichnet, dass** die Schutzschicht(en), die direkt auf die Funktionsschicht(en) auf Basis von Silber aufgebracht sind, aus ZnO, eventuell dotiert mit Aluminium, hergestellt aus einem Keramiktarget, sind.

12. Transparente Verglasung nach einem der vorhergehenden Ansprüche, **dadurch gekennzeichnet, dass** die Gesamtlichtübertragung TL zwischen 25 % und 72 %, vorzugsweise zwischen 35 % und 68 %, beträgt.

13. Verbundverglasung, **dadurch gekennzeichnet, dass** sie eine Verglasung nach einem der vorhergehenden Ansprüche umfasst.

14. Mehrfachisolierverglasung, **dadurch gekennzeichnet, dass** sie eine Verglasung nach einem der vorhergehenden Ansprüche umfasst.

15. Mehrfachisolierverglasung nach Anspruch 15, **dadurch gekennzeichnet, dass** der Solarfaktor g, gemessen nach der Norm EN410, zwischen 12 % und 40 %, vorzugsweise zwischen 20 % und 36 %, für eine Zweifachverglasung 6/15/4 aus Klarglas beträgt.

16. Mehrfachisolierverglasung nach Anspruch 16, **dadurch gekennzeichnet, dass** die Selektivität, ausgedrückt in Form der Lichtübertragung TL bezogen auf den Solarfaktor g mindestens 1,4, vorzugsweise mindestens 1,5, vorteilhafterweise mindestens 1,6 ist.

**Claims**

1. Transparent solar-control glazing including, on at least one of the faces of a glazing substrate, a transparent multilayer stack comprising an alternation of n infrared-reflecting silver-based functional layers and n+1 dielectric coatings, with n>1, so that each functional layer is surrounded by dielectric coatings, **characterized in that** one of said dielectric coatings

a) comprises at least one solar-radiation-absorbing layer enclosed between two dielectric layers that are formed from a material chosen from aluminium or silicon nitrides, or mixtures thereof, **characterized in that** at least one functional layer is placed above said solar-radiation-absorbing layer,

b) comprises (i) an intercalating transparent oxide layer chosen from tin zinc oxide comprising between 40 and 60% tin, or titanium zirconium oxide and (ii) a zinc-oxide-based wetting layer, the intercalating transparent oxide layer being of different composition from the wetting layer, said layers being placed between this said solar-radiation-absorbing layer and this said functional layer, the wetting layer being in immediate proximity to this said functional layer,

and **characterized in that** the geometric thickness of the intercalating transparent oxide layer is comprised between 3 and 25 nm,

and **characterized in that** the energy absorption AE (according to standard EN410) of the glazing substrate coated with the multilayer stack is lower than 50%, preferably lower than 45%, and advantageously lower than 40%.

2. Transparent glazing according to Claim 1, **characterized in that** the intercalating transparent oxide layer has a geometric thickness comprised between 3 and 12 nm.

3. Transparent glazing according to either of Claims 1 and 2, **characterized in that** the dielectric layers enclosing the solar-radiation-absorbing layer are based on silicon nitride.

4. Transparent glazing according to any one of Claims 1 to 3, **characterized in that** the solar-radiation-absorbing layer is essentially in metal form.

5. Transparent glazing according to Claim 4, **characterized in that** the solar-radiation-absorbing layer is a metal chosen from the alloys NiCr, NiCrW, WTa, WCr, NbZr, TaNiV, NbCr, NiV and CrZr, and preferably NiCrW and CrZr.

6. Transparent glazing according to any one of Claims 1 to 3, **characterized in that** the solar-radiation-absorbing layer is a nitride or a sub-nitride.

7. Transparent glazing according to Claim 6, **characterized in that** the solar-radiation-absorbing layer is a nitride chosen from TiN, NiCrWN, NiVN, TaN, CrN, ZrN, CrZrN, TiAlN, TiZrN, WN, SiZrN and SiNiCrN, and preferably chosen from TiN and NiCrWN.

8. Transparent glazing according to any one of Claims 1 to 7, **characterized in that** the stack comprises at least two infrared-reflecting silver-based functional layers.

9. Transparent glazing according to Claim 8, **characterized in that** the solar-radiation-absorbing layer is placed between the two infrared-reflecting silver-based functional layers.

10. Transparent glazing according to any one of Claims 1 to 10, **characterized in that** the first dielectric layer, of the first dielectric coating, which layer is deposited on the glazing substrate, and in contact therewith, is a layer of tin zinc oxide preferably containing at least 20% tin.

11. Transparent glazing according to any one of Claims 1 to 11, **characterized in that** one or more protective layers deposited directly on the one or more silver-based functional layers are made of optionally aluminium-doped ZnO obtained from a ceramic target.

12. Transparent glazing according to any one of the preceding claims, **characterized in that** the total light transmittance TL is comprised between 25% and 72%, and preferably between 35% and 68%.

13. Laminated glazing **characterized in that** it comprises a glazing according to any one of the preceding claims.

14. Multiple insulating glazing **characterized in that** it comprises a glazing according to any one of the preceding claims.

15. Multiple insulating glazing according to Claim 15, **characterized in that** the solar factor g, measured according to standard EN410, is comprised between 12% and 40%, and preferably between 20% and 36%, for a 6/15/4 double glazing made of clear glass.

16. Multiple insulating glazing according to Claim 16, **characterized in that** selectivity, expressed in the form of light transmittance TL with respect to the solar factor g, is at least 1.4, preferably at least 1.5, and advantageously at least 1.6.

**EP 2 956 422 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005091864 A2
- WO 2009032032 A1
- WO 0248065 A1
- WO 201048065 A